(19) Europäisches Patentamt
European Patent Office
Office européen des brevets

(11) **EP 1 239 170 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*F16C 13/02* (2006.01)    *D21G 1/02* (2006.01)

(21) Anmeldenummer: **02004868.2**

(22) Anmeldetag: **04.03.2002**

(54) **Selbstanstellende Durchbiegungseinstellwalze**

Self-adjusting deflection controlled roll

Rouleau à auto-réglage de la flexion

(84) Benannte Vertragsstaaten:
**DE FI FR GB SE**

(30) Priorität: **06.03.2001 DE 10110695**

(43) Veröffentlichungstag der Anmeldung:
**11.09.2002 Patentblatt 2002/37**

(73) Patentinhaber: **Voith Paper Patent GmbH**
**89522 Heidenheim (DE)**

(72) Erfinder: **Meschenmoser, Andreas**
**88263 Horgenzell (DE)**

(74) Vertreter: **Manitz, Finsterwald & Partner GbR**
**Postfach 31 02 20**
**80102 München (DE)**

(56) Entgegenhaltungen:
**EP-A- 0 787 912       US-A- 5 193 258**

**Beschreibung**

Die Erfindung betrifft eine selbstanstellende Durchbiegungseinstellwalze mit einem umlaufenden Walzenmantel, einem den Walzenmantel axial durchsetzenden, endseitig drehfest in Gestellen gehaltenen Joch und wenigstens einem am Joch angeordneten, auf die Innenseite des Walzenmantels in einer Pressebene eine Stützkraft ausübenden Stützelement, wobei zumindest ein axiales Ende des Walzenmantels oder ein diesem zugeordneter axialer Fortsatz durch wenigstens ein Lager drehbar auf einer sich in den Bereich zwischen Walzenmantel bzw. axialem Fortsatz und Joch erstreckenden nichtdrehenden axialen Lagerbuchse eines gegen Verdrehung gesicherten Lagergehäuses gelagert ist, das gegenüber dem Joch im wesentlichen in der Pressebene senkrecht zur Walzenachse frei beweglich ist, und der Walzenmantel über die axiale Lagerbuchse eines jeweiligen Lagergehäuses quer zur Presskraftebene radial am Joch abgestützt und an einem axialen Ende über radial zwischen der Lagerbuchse des betreffenden Lagergehäuses und dem Joch vorgesehene, gegenüber dem Joch sowohl eine Kippbewegung als auch eine Bewegung der Lagerbuchse im wesentlichen in der Presskraftebene senkrecht zur Walzenachse zulassende Führungsmittel axial am Joch fixiert ist.

Bei einer solchen aus der US 5 193 285 bekannten Durchbiegungseinstellwalze umfassen die Führungsmittel eine an der axialen Lagerbuchse des Lagergehäuses angebrachte, mit einer konkaven sphärischen Oberfläche versehene sphärische Buchse, einen seitlich um eine zur Walzenachse parallele Achse schwenkbar am Joch gelagerten Innenring mit einer konvexen sphärischen Oberfläche sowie eine am Joch befestigte, den Innenring axial am Joch fixierende Ringführung. Die konkave sphärische Oberfläche der sphärischen Buchse wirkt mit der konvexen sphärischen Oberfläche des Innenrings zusammen, um die Kippbewegung der axialen Lagerbuchse relativ zum Joch zu ermöglichen. Aufgrund des um die betreffende Achse schwenkbaren Innenrings ist der Walzenmantel an die jeweilige Gegenwalze anstellbar.

Solche Durchbiegungseinstellwalzen werden in der Praxis häufig in Press- und Glättpartien von Papiermaschinen eingesetzt, wobei sie insbesondere als sogenannte selbstanstellende Walzen ausgeführt sein können, bei denen der Walzenmantel zum Öffnen und Zustellen des Pressmantels insbesondere durch die Stützelemente gegenüber dem Joch um mehrere Zentimeter verlagert werden kann.

Bei einer aus der EP-A-0 787 912 bekannten Durchbiegungseinstellwalze ist das betreffende Lagergehäuse außerhalb der Lagerbuchse an einem drehbar am Joch gehaltenen, einen Führungsflansch aufweisenden Führungsring senkrecht zur Walzenachse in der Pressebene geführt, der durch ein Gelenklager mit kugelförmiger Lagerfläche dreh- und kippbar am Joch gehalten ist. Durch axial zwischen der Lagerbuchse und einer radialen Ringfläche des Jochs angeordnete Führungselemente ist der Walzenmantel an dem Joch gegen Verdrehung gesichert.

Ziel der Erfindung ist es, eine verbesserte Durchbiegungseinstellwalze der eingangs genannten Art zu schaffen. Dabei soll u.a. eine möglichst kompakte, selbstführende Lagerung sowie eine möglichst zentrische Krafteinleitung im Bereich dieser Lagerung erreicht werden.

Diese Aufgabe wird nach der Erfindung dadurch gelöst, dass die Führungsmittel wenigstens ein um eine zur Presskraftebene senkrechte Achse drehbar in der Lagerbuchse oder dem Joch gelagertes Führungselement umfassen, das als Kulisse in einer am Joch bzw. an der Lagerbuchse vorgesehenen Führung gleitet und durch diese im wesentlichen parallel zur Presskraftebene senkrecht zur Walzenachse verschiebbar geführt ist. Die radial zwischen der Lagerbuchse und dem Joch vorgesehenen Führungsmittel sind vorzugsweise in einem axial mittleren Bereich der Lagerbuchse und/oder in Axialrichtung zentrisch zu dieser Lagerbuchse angeordnet.

Mit dieser Ausbildung ergibt sich insbesondere eine äußerst kompakte, selbstführende Lagerung, in deren Bereich eine zentrische Krafteinleitung möglich ist. Zudem ist das Lagergehäuse unabhängig von der jeweiligen Walzenbelastung bzw. -durchbiegung stets nach dem Walzenmantel ausgerichtet, so dass es insbesondere auch bei einer stärkeren Walzendurchbiegung zu keinem Verkippen zwischen dem Walzenmantel und dem Lagergehäuse kommen kann. Klemmeffekte im Bereich der eine Kippbewegung zulassenden Führungsmittel sind praktisch ausgeschlossen. Über das betreffende Getriebelager ist gleichzeitig sowohl die radiale als auch die axiale Führung des Walzenmantels sichergestellt.

Zweckmäßigerweise ist die Lagerbuchse über die Führungsmittel auch quer zur Pressebene radial am Joch abgestützt.

Die Führungsmittel können insbesondere wenigstens zwei auf einander gegenüberliegenden Seiten des Jochs vorgesehene, jeweils mit einer Führung zusammenwirkende kulissenartige Führungselemente umfassen.

Die mit einem jeweiligen Führungselement zusammenwirkende Führung kann beispielsweise an einer am Joch bzw. an der Lagerbuchse befestigten Gegenplatte ausgebildet sein.

Das drehbar in der Lagerbuchse bzw. dem Joch gelagerte Führungselement kann insbesondere durch einen Bundzapfen oder dergleichen gebildet sein.

Vorteilhafterweise ist der Walzenmantel am triebseitigen axialen Ende über die einem betreffenden Lagergehäuse zugeordneten Führungsmittel axial am Joch fixiert.

Vorteilhafterweise ist der Walzenmantel am anderen, vorzugsweise führungsseitigen, axialen Ende über die axiale Lagerbuchse eines betreffenden Lagergehäuses der zur Presskraftebene radial am Joch abgestützt, gegenüber diesem jedoch axial verschiebbar. Dabei ist die Lagerbuchse des betreffenden Lagergehäuses zweckmäßigerweise über wenigstens zwei auf einander gegenüberliegenden Jochseiten angeordnete Lagerelemente radial am Joch abgestützt, die jeweils um eine zur Pressebene senkrechte Achse drehbar in der Lagerbuchse oder dem Joch gelagert sind. Die jeweils um eine zur Pressebene senkrechte Achse drehbar in der Lagerbuchse oder dem Joch gelagerten Lagerelemente können mit einer Gegenfläche zusammenwirken, die vorzugsweise durch eine am Joch bzw. an der Lagerbuchse befestigte Gegenplatte gebildet ist.

Bei einer bevorzugten praktischen Ausführungsform der erfindungsgemäßen Durchbiegungseinstellwalze ist radial zwischen der Lagerbuchse eines jeweiligen Lagergehäuses und dem Joch wenigstens eine allgemein in der Pressebene senkrecht zur Walzenachse wirkende Zylinder/Kolben-Anordnung vorgesehen. Dabei kann wenigstens eine auf der Stützelementseite des Jochs und/oder wenigstens eine auf der gegenüberliegenden Jochseite angeordnete Zylinder/Kolben-Anordnung vorgesehen sein.

Eine solche Zylinder/Kolben-Anordnung kann insbesondere dazu dienen, den Walzenmantel von den außerhalb der Arbeitsbreite des Walzenmantels wirksamen Gewichtskräften zu entlasten und/oder das jeweilige Mantelende zur Beeinflussung der Presskraftverteilung im Pressspalt durch gesteuerte Druckmittelbeaufschlagung zu belasten oder zu entlasten und/oder den Walzenmantel in von einer Gegenwalze abgehobener Position durch Absperren des Druckmittel-Rückflusses aus der Zylinder/Kolben-Anordnung zu arretieren.

Die Lagerbuchse eines jeweiligen Lagergehäuses kann insbesondere im Bereich eines gegenüber dem axial zentralen Bereich des Jochs verjüngten Jochzapfens vorgesehen sein. Somit kann insbesondere auch die Zylinder/ Kolben-Anordnung zwischen dem verjüngten Jochzapfen und der Lagerbuchse angeordnet sein, wo ausreichend Platz zur Verfügung steht.

Der die Lagerbuchse beaufschlagende Kolben der Zylinder/Kolben-Anordnung kann auf seiner der Lagerbuchse zugewandten Seite eine mit Druckfluid gespeiste Entlastungskammer aufweisen, wodurch die auftretenden Axial- bzw. Reibkräfte verringert werden. Dabei kann die Entlastungskammer über wenigstens eine Kapillare gespeist sein. Die Speisung der Entlastungskammer über die Druckkammer der Zylinder/Kolben-Anordnung durch den Kolben hindurch oder von der Seite der Lagerbuchse her erfolgen.

Der Kolben der Zylinder/Kolben-Anordnung kann unmittelbar an der Innenseite der Lagerbuchse oder an einer flachen Seite eines zwischen dem Joch und der Lagerbuchse angeordneten Zwischenelements anliegen.

Im letzteren Fall ergibt sich der Vorteil, dass der Kolben nicht an die gekrümmte Innenseite der Führungsbuchse angepasst sein muss.

Bei einer bevorzugten praktischen Ausführungsform ist wenigstens ein axiales Ende des Walzenmantels bzw. der diesem zugeordnete axiale Fortsatz durch zwei axial beabstandete Lager drehbar auf der Lagerbuchse gelagert. Dabei sind die beiden axial beabstandeten Lager vorzugsweise jeweils durch ein Wälzlager gebildet.

Die Durchbiegungseinstellwalze kann als einzonige Walze, bei der zumindest die Stützelemente mit gleichem Druck beaufschlagbar sind, oder als mehrzonige Walze ausgeführt sein, bei der wenigstens die Stützelemente zumindest teilweise mit unterschiedlichem Druck beaufschlagbar sind.

Bei einer bevorzugten praktischen Ausführungsform trägt das triebseitige axiale Ende des Walzenmantels bzw. der diesem zugeordnete axiale Fortsatz radial außen einen dem Walzenantrieb dienenden Zahnkranz.

Von Vorteil ist, wenn die axialen Mitten des Zahnkranzes, der den Walzenmantel am Lagergehäuse drehbar halternden Lageranordnung, der Führungsmittel und/oder der Zylinder/Kolben-Anordnung im wesentlichen in einer zur Walzenachse senkrecht stehenden gemeinsamen Ebene liegen. Damit ist ausgeschlossen, dass im Betrieb Momente entstehen, welche sich nachteilig auf den Zahneingriff der Antriebsverzahnung auswirken können, so dass sich die Zahnflanken im Rahmen der Lagerspiele in den Hauptlagern optimal aneinander anlegen können.

Aufgrund der erfindungsgemäßen Lösung lässt sich insbesondere eine kostengünstige Durchbiegungsausgleichswalze für kompakte und hebellose Pressenanordnungen verwirklichen. Die Walze kann schwingungsdämpfend sein, und ist für schnelllaufende Papiermaschinen geeignet. Für alle DuoCentri-Pressen, Combipressen und freistehende Pressen mit einer Spaltbreite kleiner oder gleich 5200 mm ist nur noch ein universell einsetzbar Biegeausgleichswalzentyp erforderlich ("lean standard").

Das Lager- bzw. Getriebegehäuse und der Walzenmantel können im Gegensatz zu der bisher üblichen selbsteinstellenden Durchbiegungseinstellwalzen innerhalb des Walzenmantel-Hohlzapfens gelagert sein, indem eine mit dem Lagergehäuse verbundene Kragnabe oder Lagerbuchse den nicht rotierenden Lagerinnenring aufnimmt. Diese nicht drehende Lagerbuchse übernimmt gleichzeitig die Aufgabe der radialen Walzenmantelabstützung quer zur Niprichtung.

Die axiale Fixierung des Walzenmantels zum Joch erfolgt über das triebseitige, in die Lagerbuchse drehbar eingesteckte Führungsteil, das als Kulisse beispielsweise in einer am Joch befestigten Gegenplatte in Niprichtung geführt ist. Somit ist die radiale und axiale Führung des Walzenmantels gleichzeitig durch das dafür entsprechend ausgeführte Getriebelager gegeben.

Das bisher übliche, am Mantelende angeordnete teure Pendelrollenlager samt Kulissenführung entfällt. Damit können die Stützelemente oder - quellen näher am Walzenrand plaziert werden.

Ein hydraulischer Druckkolben kann unter der nicht drehenden, insbesondere als Kulissenring vorgesehene Lagerbuchse getriebemittig angeordnet sein, wobei durch eine oder mehrere hydraulische Druckkolben eine Beaufschlagung in und/ oder entgegen der Niprichtung möglich ist.

Durch die beidseitig weit außen angeordneten Druckkolben ist es beispielsweise möglich, eine variable Bombierung einzustellen, indem gleichzeitig mit den Druckkolben beispielsweise eine einzonige hydrostatische Stützquellenreihe beaufschlagt wird.

Bei oben angeordneten Anpresswalzen dienen die unter dem Lager angeordneten Druckkolben gleichzeitig der Mantelabhebung.

Durch die innerhalb des Hohlzapfens oder axialen Fortsatzes angeordneten Getriebelager kann das Gehäuse einteilig sein, während es bisher dreiteilig war. Der normalerweise zwischen Getriebegehäuse und Walzenzapfen angeordnete, ein Verschleissteil bildende Radialwellendichtring kann somit sehr leicht gewechselt werden, ohne dass das Getriebegehäuse zerlegt und neu abgedichtet werden muss. Die Walzenlagerung kann montiert bleiben.

Das Übersetzungsverhältnis zwischen Ritzel und Außenverzahnung am Hohlzapfen ist wesentlich günstiger, so dass bei Maschinengeschwindigkeiten zwischen beispielsweise 1000 und 1500 m/min die idealen Übersetzungsverhältnisse, ohne Modelländerung, im gleichen Getriebegehäuse realisiert werden können. So ist insbesondere ein Direktantrieb mit Motor, ohne zusätzliches Getriebe, möglich. Entsprechend ergibt sich eine Bauraum- und Kosteneinsparung.

Es ergeben sich einfachere Jochgestaltungsmöglichkeiten mit Kastenprofil und, im Fall der Einzonigkeit, Zylinderblöcken. Die Walze wird leichter und besitzt einen kerbarmen Übergang am Jochende. Die Ölrückführung kann beispielsweise in den Profilhohlkammern realisiert werden.

Nachdem hydrostatische Gegenstützquellen im Mantelbereich entfallen können, ergeben sich geringere Walzenmanteldeformationen (ovale Schalendeformation). Es sind eventuell noch dünnere Mantelwandstärken als bei den bisher üblichen selbstanstellenden mehrzonigen Durchbiegungseinstellwalzen möglich.

Mit den durch die außenliegenden Kolben (ohne Kapillare) aufgebrachten Gegenkräften ergibt sich eine geringere Energieaufnahme.

Es ist eine einfachere, frei gestaltbare Supportausführung möglich, wobei die Führungsseite und die Triebseite ähnlich sind. Die Walze besitzt weniger Bauteile und nur noch vier Wälzlager (zwei Lagertypen). Für die von der Technologie geforderten großen Walzendurchmesser (z.B. ≥ 700 mm) ist die Walze erheblich leichter als eine bisher übliche schwimmende Walze.

Die bisher bekannten, oftmals problematischen Getriebevibrationen in den herkömmlichen selbstanstellenden Durchbiegungsausgleichswalzen infolge der fliegenden und schwach belasteten Lagerung können nunmehr durch die Kolbenkraftabstützung und durch den Reibungseinfluss an der axialen und radialen Mantelführung unterbunden bzw. gedämpft werden. Im Vergleich zu den bisher üblichen selbstanstellenden Durchbiegungsausgleichswalzen ergeben sich geringere Herstellungskosten für die Walze, was insbesondere auf die Teilereduzierung und die einfachere Jochausführung zurückzuführen ist. Überdies ist eine wesentlich günstigere und einfachere Steuerung möglich.

Gegenüber der bisher üblichen schwimmenden Walze mit äußerem Anpresssystem über Hebel ergeben sich wesentliche Anordnungsvorteile. Dazu zählen beispielsweise eine einfachere und kostengünstigere Stuhlung, ein einfacherer Filz- und Walzenwechsel, ein trotz der größeren Walze kompakterer Aufbau (mehr Freiraum zur Anordnung von Schaber, Spritzrohr, Blasensauger usw.), Einplanungsvorteile bei Umbauten mit geringem Bauraum sowie eine einfache, service- und betreiberfreundliche und betriebssichere Konstruktion.

Die erfindungsgemäße Walzenkonstruktion eignet sich sowohl für Stahlals auch für Elastmäntel. Da beim Elastmantel keine Vorbombierung an der innen gestützten Walze erforderlich ist, können die unter der Walzenlagerung angeordneten Kolben als Tragkolben für die überhängenden Lasten (Getriebe und Lagerung) eingesetzt werden. Wie bereits erwähnt kann die Walze auch als mehrzonige Walze ausgeführt werden und außerhalb der Pressenpartie z.B. in Glättwerken Anwendung finden.

Um die Axialkraft der Hauptlager infolge der Mantel- bzw. Jochdehnung klein zu halten, kann die Kontaktfläche vom Kolben zur Lagerbuchse mit wenigstens einer, durch eine Kapillare gespeisten hydrostatischen Entlastungskammer versehen sein. Die tatsächliche Axial- bzw. Reibkraft ist in diesem Fall nur noch:

$$Fa = \text{Buchsenfläche} \times P \times \mu,$$

mit P = Druck und $\mu$ = Reibungskoeffizient.

Ein weiterer Vorteil besteht insbesondere auch in der zentrischen Krafteinleitung von Hubkolben, Lagerung, Ritzel, Drehmomentabstützung (innerhalb oder außerhalb des Gehäuses) und Radialkräften durch den Walzenmantel. Es ergibt sich eine symmetrische Lagerlast aus allen Radialkräften. Zudem ist ein optimaler Ritzeleingriff sichergestellt, was bedeutet, dass ein Abkippen des Getriebes infolge von Lagerspielen praktisch ausgeschlossen ist. Der Lastkolben kann ungefähr im Getriebeschwerpunkt liegen und kann daher in idealer Weise insbesondere auch zur momentenfreien Mantelrand-Entlastung für Elastwalzen eingesetzt werden.

Ein weiterer besonderer Vorteil ist insbesondere auch in der kompakten, selbstführenden Lagerung (Haupt- und Führungslager einbaufertig in einem) zu sehen. Die Anordnung der gemeinsamen Kraft-, Lagerungs- und Ritzel-Mittellinie nahe am Jochsupport ermöglicht insbesondere bei einer einzonigen Ausführung einen idealen Linienkraftverlauf. Die Streckenlastabweichungen sind um so geringer, je näher die den Stützquellen entgegengerichteten Kolben am Jochsupport angeordnet sind.

Insgesamt ergibt sich eine einfachere Montage und Demontage (keine Lagereinstellung im Gegensatz zu separaten Kegelrollenlagern). Es sind weniger Lager und Lagertypen erforderlich. Es liegt keine Überbestimmung der Lager vor. Alles in allem wird eine kostengünstigere Lösung erreicht. Im Zapfenübergangsbereich ist eine günstigere Jochgestaltung möglich.

Die Erfindung wird im folgenden anhand von Ausführungsbeispielen unter Bezugnahme auf die Zeichnung näher erläutert; in dieser zeigen:

Figur 1   einen schematischen Längsschnitt des triebseitigen Endes einer ersten Ausführungsform einer selbstanstellenden Durchbiegungsausgleichswalze,

Figur 2   eine vergrößerte Darstellung der am triebseitigen Ende der Durchbiegungseinstellwalze gemäß Figur 1 vorgesehenen axialen und radialen Walzenführung,

Figur 3   einen Schnitt entlang der Linie C-C in Figur 2,

Figur 4   eine vergrößerte Darstellung der am führungsseitigen Ende der Durchbiegungseinstellwalze gemäß Figur 1 vorgesehenen radialen Walzenführung,

Figur 5   einen Schnitt entlang der Linie C-C in Figur 4,

Figur 6   in der rechten Hälfte einen Schnitt entlang der Linie A-A in Figur 2 der axialen und radialen Walzenführung auf der Triebseite und in der linken Hälfte einen Schnitt entlang der Linie B-B in Figur 4 der radialen Walzenführung auf der Führungsseite,

Figur 7   eine schematische Querschnittsdarstellung einer ersten Ausführungsform einer Zylinder/ Kolben-Anordnung mit einem über ein Zwischenelement am Innenumfang der Lagerbuchse anliegenden, eine Entlastungskammer aufweisenden Kolben, wobei die Entlastungskammer über eine Kapillare gespeist ist,

Figur 8   eine schematische Querschnittsdarstellung einer weiteren Ausführungsform einer Zylinder/ Kolben-Anordnung mit einem unmittelbar am Innenumfang der Lagerbuchse anliegenden, eine Entlastungskammer aufweisenden Kolben, wobei die Entlastungskammer wieder über eine Kapillare gespeist ist, und

Figur 9   eine mit der der Figur 8 vergleichbare Ausführungsform einer Zylinder/Kolben-Anordnung, bei der die Entlastungskammer des Kolbens jedoch über einen ungedrosselten Kanal gespeist ist.

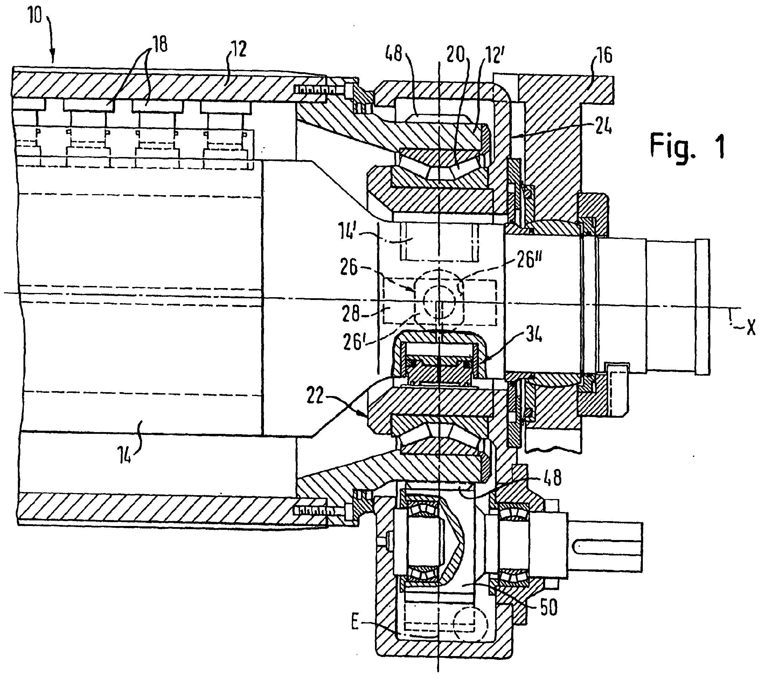

Die Figuren 1 bis 6 zeigen in rein schematischer Darstellung eine selbstanstellende Durchbiegungseinstellwalze 10.

Diese Durchbiegungseinstellwalze 10 umfasst einen umlaufenden Walzenmantel 12 sowie ein diesen axial durchsetzendes Joch 14.

Das Joch 14 ist endseitig drehfest in Gestellen 16 gehalten. Dabei ist in Figur 1 lediglich das triebseitige Gestell 16 dargestellt.

Wie am besten wieder anhand der Figur 1 zu erkennen ist, sind am Joch 14 mehrere in einer Pressebene eine Stützkraft ausübende Stützelemente 18 vorgesehen, bei denen es sich beispielsweise um hydrostatische oder hydrodynamische Stützelemente handeln kann.

Die beiden axialen Enden des Walzenmantels 12 bzw. diesen zugeordnete axiale Fortsätze 12' sind jeweils durch zwei axial beabstandete Wälzlager 20 drehbar auf einer sich in den Bereich zwischen axialem Fortsatz 12' und Joch 14 erstreckenden nicht drehenden axialen Kragnabe oder Lagerbuchse 22 eines gegen Verdrehung gesicherten Lagergehäuses 24 gelagert. Das Lagergehäuse 24 ist gegenüber dem Joch 14 im wesentlichen in der Pressebene senkrecht zur Walzenachse X frei beweglich.

Sowohl auf der Triebseite als auch auf der Führungsseite ist der Walzenmantel 12 über die axiale Lagerbuchse 22 des betreffenden Lagergehäuses 24 jeweils quer zur Presskraftebene radial am Joch 14 abgestützt.

Wie insbesondere anhand der Figuren 1 bis 3 und 6 (rechte Hälfte) zu erkennen ist, ist der Walzenmantel 12 am triebseitigen axialen Ende überdies über radial zwischen der Lagerbuchse 22 des Lagergehäuses 24 und dem Joch 14 vorgesehene Führungsmittel 26 axial am Joch 14 fixiert. Diese Führungsmittel 26 lassen gegenüber dem Joch 14 sowohl eine Kippbewegung als auch eine Bewegung der Lagerbuchse 22 im wesentlichen in der Pressebene senkrecht zur Walzenachse zu.

Wie am besten anhand der Figur 1 zu erkennen ist, sind die radial zwischen der Lagerbuchse 22 und dem Joch 14 vorgesehenen Führungsmittel 26 in einem axial mittleren Bereich der Lagerbuchse 22 bzw. in Axialrichtung zentrisch zu dieser Lagerbuchse 22 angeordnet.

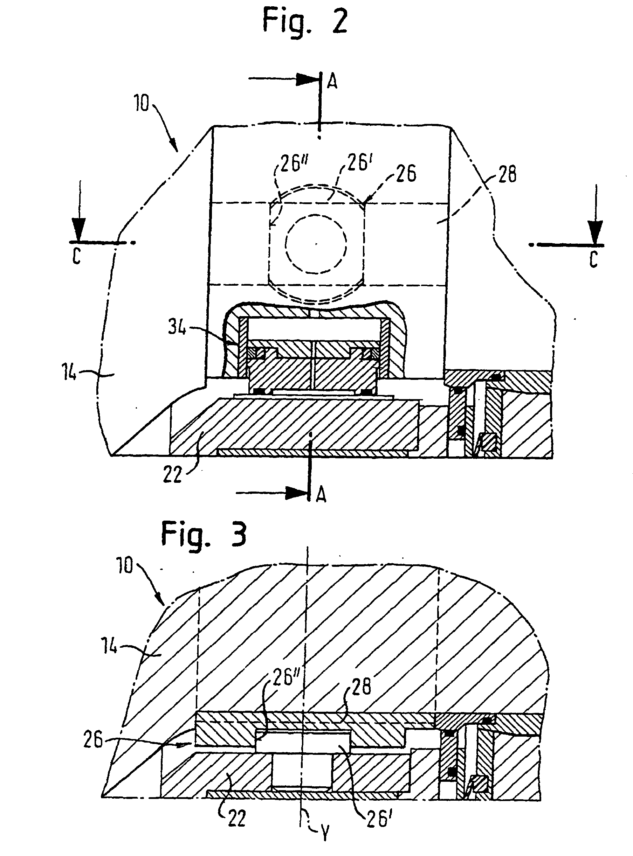

Die Lagerbüchse 22 ist über diese Führungsmittel 26 nicht nur axial am Joch 14 fixiert, sondern gleichzeitig auch quer zur Pressebene radial am Joch 14 abgestützt (vgl. insbesondere auch die Figuren 2, 3 und 6; rechte Hälfte).

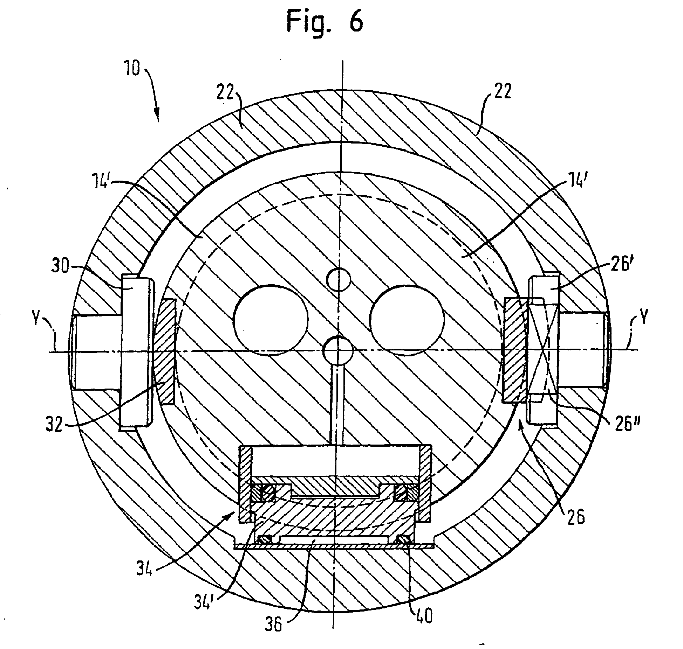

Beim vorliegenden Ausführungsbeispiel umfassen die Führungsmittel 26 zwei auf einander gegenüberliegenden Seiten des Jochs 14 vorgesehene Führungselemente 26', die jeweils um eine zur Pressebene senkrechte Achse Y (vgl. insbesondere die Figuren 3 und 6) drehbar in der Lagerbuchse 22 gelagert und als Kulisse in einer am Joch 14 vorgesehenen Führung 26" gleiten und durch diese im wesentlichen parallel zur Pressebene senkrecht zur Walzenachse X verschiebbar geführt sind. Dabei kann die mit einem jeweiligen Führungselement 26' zusammenwirkende Führung 26" an einer jeweiligen, am Joch 14 befestigten Gegenplatte 28 ausgebildet sein. Im vorliegenden Fall ist die Führung 26" durch eine in der Gegenplatte 28 vorgesehene geradlinige Nut gebildet. Im vorliegenden Fall ergibt sich somit ein Festlager.

Wie anhand der Figuren 1 bis 3 und 6 (rechte Hälfte) zu erkennen ist, können die Führungselemente 26' jeweils durch einen Bundzapfen oder dergleichen gebildet sein. Im vorliegenden Fall ist der Bund auf zwei einander gegenüberliegenden Seiten abgeflacht, die mit den betreffenden, einander gegenüberliegenden Seiten der Führung 26" zusammenwirken (vgl. insbesondere Figur 2). Ein jeweiliges Führungselement bzw. Bundzapfen 26' ist somit zwar in der Lagerbuchse 22, jedoch nicht in der Führung 26" drehbar.

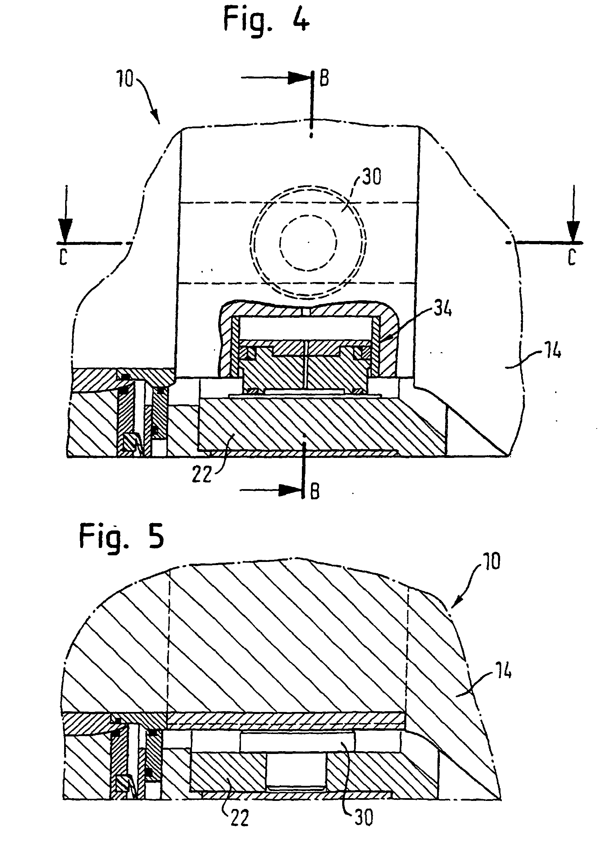

Am anderen, führungsseitigen axialen Ende ist der Walzenmantel 12 über die axiale Lagerbuchse 22 des betreffenden Lagergehäuses 24 zwar ebenfalls quer zur Presskraftebene radial am Joch 14 abgestützt, gegenüber diesem jedoch axial verschiebbar (vgl. die Figuren 4, 5 und 6; linke Hälfte). Dabei ist die Lagerbuchse 22 des betreffenden Lagergehäuses 24 über zwei auf einander gegenüberliegenden Jochseiten angeordnete Lagerelemente 30 radial am Joch abgestützt, die jeweils wieder um eine zur Pressebene senkrechte Achse Y drehbar in der Lagerbuchse 22 gelagert sind. Auch diese Lagerelemente 30 können jeweils wieder durch einen Bundzapfen oder dergleichen gebildet sein.

Im vorliegenden Fall wirken die jeweils um eine zur Pressebene senkrechte Achse Y drehbar in der Lagerbuchse 22 gelagerten Lagerelemente bzw. Bundzapfen 30 mit einer Gegenfläche zusammen, die durch eine am Joch 14 befestigte Gegenplatte 32 gebildet ist. Wie anhand der Figur 6 (vgl. linke Hälfte) zu erkennen ist, ist die durch die Gegenplatte 32 gebildete Gegenfläche im Querschnitt betrachtet gekrümmt und an den Außenumfang des Jochs 14 angepasst. In Axialrichtung verläuft sie geradlinig, so dass die Lagerelemente 30 relativ zu dieser Fläche axial verschiebbar sind. Im vorliegenden Fall ergibt sich somit ein Loslager.

Radial zwischen der Lagerbuchse 22 eines jeweiligen Lagergehäuses 24 und dem Joch ist wenigstens eine allgemein in der Pressebene senkrecht zur Walzenachse X wirkende Zylinder/Kolben-Anordnung 34 vorgesehen.

Dabei kann jeweils wenigstens eine auf der Stützelementseite des Jochs 14 und/oder wenigstens eine auf der gegenüberliegenden Jochseite angeordnete Zylinder/Kolben-Anordnung 34 vorgesehen sein.

Diese Zylinder/Kolben-Anordnungen 34 können beispielsweise dazu dienen, den Walzenmantel 12 von den außerhalb der Arbeitsbreite des Walzenmantels 12 wirksamen Gewichtskräften zu entlasten und/oder das jeweilige Mantelende zur Beeinflussung der Presskraftverteilung im Pressspalt durch gesteuerte Druckmittelbeaufschlagung zu belasten oder zu entlasten und/oder den Walzenmantel 12 in von einer Gegenwalze abgehobener Position durch Absperren des Druckmittel-Rückflusses aus der Zylinder/Kolben-Anordnung 34 zu arretieren.

Wie insbesondere wieder anhand der Figur 1 zu erkennen ist, kann die Lagerbuchse 22 eines jeweiligen Lagergehäuses 24 im Bereich eines gegenüber dem axial zentralen Bereich des Jochs 14 verjüngten Jochzapfens 14' vorgesehen sein. Entsprechend kann die Zylinder/Kolben-Anordnung 34 zwischen einem solchen verjüngten Jochzapfen 14' und der Lagerbuchse 22 angeordnet sein.

Wie insbesondere anhand der Figuren 6 bis 9 zu erkennen ist, kann der die Lagerbuchse 22 beaufschlagende Kolben 34' einer jeweiligen Zylinder/Kolben-Anordnung 34 auf seiner der Lagerbuchse 22 zugewandten Seite eine mit Druckfluid gespeiste Entlastungskammer 36 aufweisen.

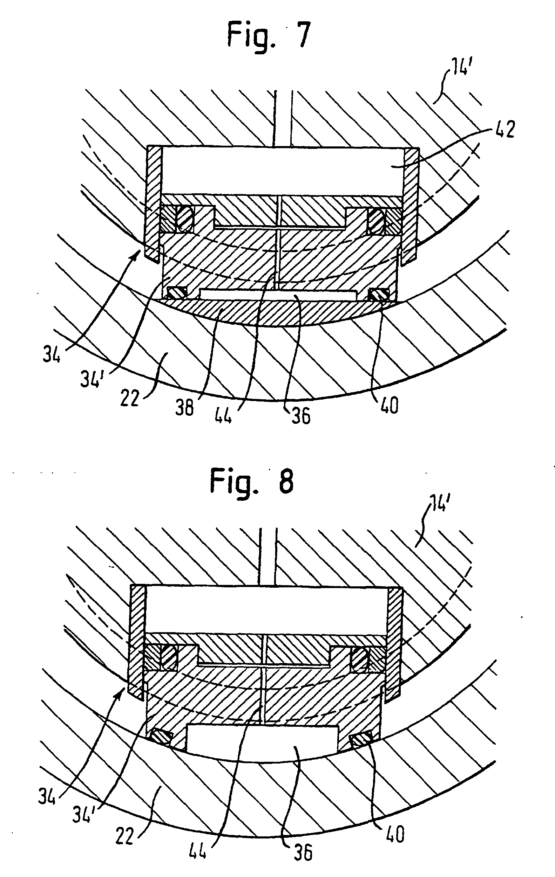

Figur 7 zeigt in schematischer Querschnittsdarstellung eine erste Ausführungsform einer solchen Zylinder/Kolben-Anordnung 34, bei der der Kolben 34' über ein Zwischenelement 38 am Innenumfang der Lagerbuchse 22 anliegt. Dabei ist der Kolben 34' über eine Dichtung 40 gegenüber diesem Zwischenelement 38 abgedichtet. Die Entlastungskammer 36 ist über die Druckkammer 42 der Zylinder/Kolben-Anordnung 34 über eine Kapillare 44 durch den Kolben 34' hindurch mit Druckfluid gespeist.

Figur 8 zeigt in schematischer Querschnittsdarstellung eine weitere Ausführungsform einer Zylinder/Kolben-Anordnung 34 mit einem Kolben 34', der eine über eine Kapillare 44 gespeiste Entlastungskammer 36 aufweist. In diesem Fall liegt der Kolben 34' unmittelbar am Innenumfang der Lagerbuchse an. Der Kolben 34' ist über eine Dichtung 40 gegenüber der Lagerbuchse 22 abgedichtet.

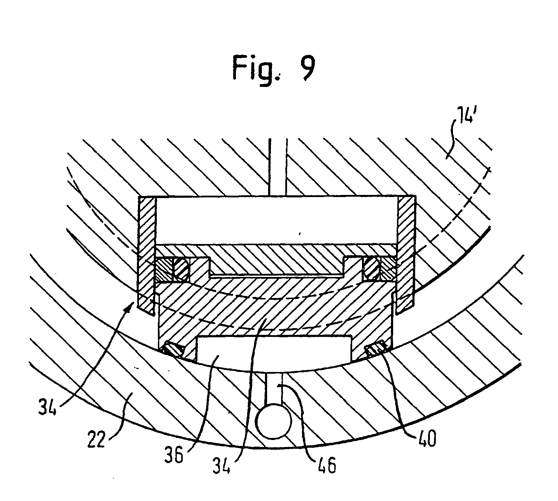

Figur 9 zeigt eine mit der der Figur 8 vergleichbare Ausführungsform einer Zylinder/Kolben-Anordnung 34, bei der die Entlastungskammer 36 jedoch über einen ungedrosselten Kanal 46 von der Seite der Lagerbuchse 22 her gespeist ist. Der Kolben 34' ist wieder über eine Dichtung 40 gegenüber dem Innenumfang der Lagerbuchse 22 abgedichtet.

Bei der Ausführungsform gemäß Figur 7 liegt der Kolben 34' der Zylinder/Kolben-Anordnung 34 an einer flachen Seite des zwischen dem Joch 14 bzw. dem Jochzapfen 14' und der Lagerbuchse 22 angeordneten Zwischenelements 38 an. Dies bringt den Vorteil mit sich, dass der Kolben 34' nicht an den gekrümmten Innenumfang der Lagerbuchse 22 angepasst sein muß.

Die Durchbiegungseinstellwalze 10 kann als einzonige Walze, bei der zumindest die Stützelemente 18 mit gleichem Druck beaufschlagbar sind, oder auch als mehrzonige Walze ausgeführt sein, bei der die Stützelemente 18 zumindest teilweise mit unterschiedlichem Druck beaufschlagbar sind.

Wie anhand der Figur 1 zu erkennen ist, trägt das triebseitige axiale Ende des Walzenmantels 12 bzw. der diesem Ende zugeordnete axiale Fortsatz 12' radial außen einen dem Walzenantrieb dienenden Zahnkranz 48, der mit einem Antriebsritzel 50 kämmt.

Die axialen Mitten des Zahnkranzes 48, der den Walzenmantel 12 am Lagergehäuse 24 drehbar halternden Lageranordnung 20, der Führungsmittel 26, der Zylinder/Kolben-Anordnung 34 und/oder des Ritzels 50 können, wie in Figur 1 dargestellt, im wesentlichen in einer zur Walzenachse X senkrecht stehenden gemeinsamen Ebene E liegen.

Im vorliegenden Fall ist das Lagergehäuse 24 am Gestell 16 gegen ein Verdrehen gesichert. Grundsätzlich kann eine solche Drehsicherung auch innerhalb des Lagergehäuses 24 erfolgen.

**Bezugszeichenliste**

| | |
|---|---|
| 10 | Durchbiegungseinstellwalze |
| 12 | Walzenmantel |
| 12' | axialer Fortsatz |
| 14 | Joch |
| 14' | Jochzapfen |
| 16 | Gestell |
| 18 | Stützelement |
| 20 | Wälzlager |
| 22 | Lagerbuchse |
| 24 | Lagergehäuse |
| 26 | Führungsmittel |
| 26' | Führungselement |
| 26" | Gegenplatte |
| 30 | Lagerelement |
| 32 | Gegenplatte |
| 34 | Zylinder/ Kolben-Anordnung |
| 34' | Kolben |
| 36 | Entlastungskammer |
| 38 | Zwischenelement |
| 40 | Dichtung |
| 42 | Druckkammer |
| 44 | Kapillare |
| 46 | Kanal |
| 48 | Zahnkranz |
| 50 | Antriebsritzel |
| | |
| E | Ebene |
| X | Walzenachse |
| Y | Drehachse |

**Patentansprüche**

1. Selbstanstellende Durchbiegungseinstellwalze (10) mit einem umlaufenden Walzenmantel (12), einem den Walzenmantel (12) axial durchsetzenden, endseitig drehfest in Gestellen (16) gehaltenen Joch (14) und wenigstens einem am Joch (14) angeordneten, auf die Innenseite des Walzenmantels in einer Presskraftebene eine Stützkraft ausübenden Stützelement (18), wobei zumindest ein axiales Ende des Walzenmantels (12) oder ein diesem zugeordneter axialer Fortsatz (12') durch wenigstens ein Lager drehbar auf einer sich in den Bereich zwischen Walzenmantel (12) bzw. axialem Fortsatz (12') und Joch (14) erstreckenden nichtdrehenden axialen Lagerbuchse (22) eines gegen Verdrehung gesicherten Lagergehäuses (24) gelagert ist, das gegenüber dem Joch (14) im wesentlichen in der Presskraftebene senkrecht zur Walzenachse (X) frei beweglich ist, und der Walzenmantel (12) über die axiale Lagerbuchse (22) eines jeweiligen Lagergehäuses (24) quer zur Presskraftebene radial am Joch (14) abgestützt und an einem axialen Ende über radial zwischen der Lagerbuchse (22) des betreffenden Lagergehäuses (24) und dem Joch (14) vorgesehene, gegenüber dem Joch (14) sowohl eine Kippbewegung als auch eine Bewegung der Lagerbuchse (22) im wesentlichen in der Presskraftebene senkrecht zur Walzenachse zulassende Führungsmittel (26) axial am Joch (14) fixiert ist, **dadurch gekennzeichnet,** **dass** die Führungsmittel (26) wenigstens ein um eine zur Presskraftebene senkrechte Achse (Y) drehbar in der Lagerbuchse (22) oder dem Joch (14) gelagertes Führungselement (26') umfassen, das als Kulisse in einer am Joch (14) bzw. an der Lagerbuchse (22) vorgesehenen Führung (26") gleitet und durch diese im wesentlichen parallel zur Presskraftebene senkrecht zur Walzenachse (X) verschiebbar geführt ist.

2. Durchbiegungseinstellwalze nach Anspruch 1, **dadurch gekennzeichnet,** **dass** die radial zwischen der Lagerbuchse (22) und dem Joch (14) vorgesehenen Führungsmittel (26) in einem axial mittleren Bereich der Lagerbuchse (22) und/oder in Axialrichtung zentrisch zu dieser Lagerbuchse (22) angeordnet sind.

3. Durchbiegungseinstellwalze nach Anspruch 1 oder 2, **dadurch gekennzeichnet,** **dass** die Lagerbuchse (22) über die Führungsmittel (26) auch quer zur Presskraftebene radial am Joch (14) abgestützt ist.

4. Durchbiegungseinstellwalze nach einem der vorhergehenden Ansprüche,

**dadurch gekennzeichnet,**
**dass** die Führungsmittel (26) wenigstens zwei auf einander gegenüberliegenden Seiten des Jochs (14) vorgesehene, jeweils mit einer Führung (26'') zusammenwirkende kulissenartige Führungselemente (26') umfassen.

5. Durchbiegungseinstellwalze nach einem der vorhergehenden Ansprüche,
**dadurch gekennzeichnet,**
**dass** die mit einem jeweiligen Führungselement (26') zusammenwirkende Führung (26'') an einer am Joch (14) bzw. an der Lagerbuchse befestigten Gegenplatte (28) ausgebildet ist.

6. Durchbiegungseinstellwalze nach einem der vorhergehenden Ansprüche,
**dadurch gekennzeichnet,**
**dass** das Führungselement (26') durch einen Bundzapfen oder dergleichen gebildet ist.

7. Durchbiegungseinstellwalze nach einem der vorhergehenden Ansprüche,
**dadurch gekennzeichnet,**
**dass** der Walzenmantel (12) am triebseitigen axialen Ende über die einem betreffenden Lagergehäuse (24) zugeordneten Führungsmittel (26) axial am Joch (14) fixiert ist.

8. Durchbiegungseinstellwalze nach einem der vorhergehenden Ansprüche,
**dadurch gekennzeichnet,**
**dass** der Walzenmantel (12) am anderen, vorzugsweise führungsseitigen, axialen Ende über die axiale Lagerbuchse (22) eines betreffenden Lagergehäuses (24) quer zur Presskraftebene radial am Joch (14) abgestützt, gegenüber diesem jedoch axial verschiebbar ist.

9. Durchbiegungseinstellwalze nach Anspruch 8,
**dadurch gekennzeichnet,**
**dass** die Lagerbuchse (22) des betreffenden Lagergehäuses (24) über wenigstens zwei auf einander gegenüberliegenden Jochseiten angeordnete Lagerelemente (30) radial am Joch (14) abgestützt ist, die jeweils um eine zur Presskraftebene senkrechte Achse (Y) drehbar in der Lagerbuchse (22) oder dem Joch (14) gelagert sind.

10. Durchbiegungseinstellwalze nach Anspruch 9,
**dadurch gekennzeichnet,**
**dass** die jeweils um eine zur Presskraftebene senkrechte Achse (Y) drehbar in der Lagerbuchse (22) oder dem Joch (14) gelagerten Lagerelemente (30) mit einer Gegenfläche zusammenwirken, die vorzugsweise durch eine am Joch (14) bzw. an der Lagerbuchse (22) befestigte Gegenplatte (32) gebildet ist.

11. Durchbiegungseinstellwalze nach einem der vorhergehenden Ansprüche,
**dadurch gekennzeichnet,**
**dass** radial zwischen der Lagerbuchse (22) eines jeweiligen Lagergehäuses (24) und dem Joch (14) wenigstens eine allgemein in der Presskraftebene senkrecht zur Walzenachse (X) wirkende Zylinder/Kolben-Anordnung (34) vorgesehen ist.

12. Durchbiegungseinstellwalze nach Anspruch 11,
**dadurch gekennzeichnet,**
**dass** wenigstens eine auf der Stützelementseite des Jochs (14) und/oder wenigstes eine auf der gegenüberliegenden Jochseite angeordnete Zylinder/Kolben-Anordnung (34) vorgesehen ist.

13. Durchbiegungseinstellwalze nach Anspruch 11 oder 12,
**dadurch gekennzeichnet,**
**dass** die Zylinder/Kolben-Anordnung (34) vorgesehen ist, um den Walzenmantel (12) von den außerhalb der Arbeitsbreite des Walzenmantels (12) wirksamen Gewichtskräften zu entlasten und/oder das jeweilige Mantelende zur Beeinflussung der Presskraftverteilung im Pressspalt durch gesteuerte Druckmittelbeaufschlagung zu belasten oder zu entlasten und/oder den Walzenmantel (12) in von einer Gegenwalze abgehobener Position durch Absperren des Druckmittel-Rückflusses aus der Zylinder/Kolben-Anordnung (34) zu arretieren.

14. Durchbiegungseinstellwalze nach einem der vorhergehenden Ansprüche,
**dadurch gekennzeichnet,**
**dass** die Lagerbuchse (22) eines jeweiligen Lagergehäuses (24) im Bereich eines gegenüber dem axial zentralen Bereich des Jochs (14) verjüngten Jochzapfens (14') vorgesehen ist.

15. Durchbiegungseinstellwalze nach Anspruch 14,
**dadurch gekennzeichnet,**
**dass** die Zylinder/ Kolben-Anordnung (34) zwischen dem verjüngten Jochzapfen (14') und der Lagerbuchse (22) angeordnet ist.

16. Durchbiegungseinstellwalze nach einem der vorhergehenden Ansprüche,
**dadurch gekennzeichnet,**
**dass** der die Lagerbuchse (22) beaufschlagende Kolben (34') der Zylinder/Kolben-Anordnung (34) auf seiner der Lagerbuchse (22) zugewandten Seite eine mit Druckfluid gespeiste Entlastungskammer (36) aufweist.

17. Durchbiegungseinstellwalze nach Anspruch 16,
**dadurch gekennzeichnet,**
**dass** die Entlastungskammer (36) über wenigstens eine Kapillare (44) gespeist ist.

**18.** Durchbiegungseinstellwalze nach Anspruch 16 oder 17,
**dadurch gekennzeichnet,**
**dass** die Speisung der Entlastungskammer (36) über die Druckkammer (42) der Zylinder/ Kolben-Anordnung (34) und durch den Kolben (34') hindurch erfolgt.

**19.** Durchbiegungseinstellwalze nach Anspruch 16 oder 17,
**dadurch gekennzeichnet,**
**dass** die Speisung der Entlastungskammer (36) von der Seite der Lagerbuchse (22) her erfolgt.

**20.** Durchbiegungseinstellwalze nach einem der vorhergehenden Ansprüche,
**dadurch gekennzeichnet,**
**dass** der Kolben (34') der Zylinder/ Kolben-Anordnung (34) unmittelbar an der Innenseite der Lagerbuchse (22) anliegt.

**21.** Durchbiegungseinstellwalze nach einem der Ansprüche 1 bis 19,
**dadurch gekennzeichnet,**
**dass** der Kolben (34') der Zylinder/Kolben-Anordnung (34) an einer flachen Seite eines zwischen dem Joch (14) und der Lagerbuchse (22) angeordneten Zwischenelements (38) anliegt.

**22.** Durchbiegungseinstellwalze nach einem der vorhergehenden Ansprüche,
**dadurch gekennzeichnet,**
**dass** wenigstens ein axiales Ende des Walzenmantels (12) bzw. der diesem zugeordnete axialer Fortsatz (12') durch zwei axial beabstandete Lager (20) drehbar auf der Lagerbuchse (22) gelagert ist.

**23.** Durchbiegungseinstellwalze nach Anspruch 22,
**dadurch gekennzeichnet,**
**dass** die beiden axial beabstandeten Lager jeweils durch ein Wälzlager (20) gebildet sind.

**24.** Durchbiegungseinstellwalze nach einem der vorhergehenden Ansprüche,
**dadurch gekennzeichnet,**
**dass** sie als einzonige Walze ausgeführt ist, d.h. zumindest die Stützelemente (18) mit gleichem Druck beaufschlagbar sind.

**25.** Durchbiegungseinstellwalze nach einem der Ansprüche 1 bis 23,
**dadurch gekennzeichnet,**
**dass** sie als mehrzonige Walze ausgeführt ist, d.h. wenigstens die Stützelemente (18) zumindest teilweise mit unterschiedlichem Druck beaufschlagbar sind.

**26.** Durchbiegungseinstellwalze nach einem der vorhergehenden Ansprüche,
**dadurch gekennzeichnet,**
**dass** das triebseitige axiale Ende des Walzenmantels (12) bzw. der diesem zugeordnete axiale Fortsatz (12') radial außen einen dem Walzenantrieb dienenden Zahnkranz (48) trägt.

**27.** Durchbiegungseinstellwalze nach einem der vorhergehenden Ansprüche,
**dadurch gekennzeichnet,**
**dass** die axialen Mitten des Zahnkranzes (48), der den Walzenmantel (12) am Lagergehäuse (24) drehbar halternden Lageranordnung (20), der Führungsmittel (26) und/oder der Zylinder/Kolben-Anordnung (34) im wesentlichen in einer zur Walzenachse (X) senkrecht stehenden gemeinsamen Ebene (E) liegen.

## Claims

**1.** A self-adjusting deflection controlled roll (10) comprising a rotating roll jacket (12), a carrier (14) passing axially through the roll jacket (12) and held rotationally fixedly at its ends in frames (16) and at least one supporting member (18) arranged at the carrier (14) and exerting a support force on the inner side of the roll jacket in a pressing force plane with at least one axial end of the roll jacket (12) or an axial continuation (12') associated with it being rotationally mounted by at least one bearing on a non-rotating axial bearing sleeve (22) of a bearing housing (24) secured against rotation and extending into the region between the roll jacket (12) or the axial continuation (12') and the carrier (14), said bearing housing (24) being freely movable relative to the carrier (14) substantially in the pressing force plane perpendicular to the roll axis (X) and the roll jacket (12) is radially supported at the carrier (14) via the axial bearing sleeve (22) of a respective bearing housing (24) transversely to the pressing force plane and is axially fixed at the carrier (14) at an axial end via guide means (26) provided radially between the bearing sleeve (22) of the relevant bearing housing (24) and the carrier (14) and permitting both a tilting moving and a movement of the bearing sleeve (22) substantially in the pressing force plane perpendicular to the roll axis,
**characterized in that** the guide means (26) include at least one guide member (26') rotatably mounted in the bearing sleeve (22) or the carrier (14) about an axis (Y) perpendicular to the pressing FORCE plane, said guide member sliding as a follower in a guide (26") provided at the carrier (14) or at the bearing sleeve (22) and being displaceably guided by this essentially parallel to the pressing force plane perpendicular to the roll axis X.

**2.** A deflection controlled roll in accordance with claim 1, **characterized in that** the guide means (26) provided radially between the bearing sleeve (22) and the carrier (14) are arranged in an axially central region of the bearing sleeve (22) and/or centered relative to this bearing sleeve (22) in the axial direction.

**3.** A deflection controlled roll in accordance with claim 1 or claim 2, **characterized in that** the bearing sleeve (22) is also radially supported at the carrier (14) transversely to the pressing force plane via the guide means (26).

**4.** A deflection controlled roll in accordance with any one of the preceding claims, **characterized in that** the guide means (26) include at least two follower-like guide members (26') provided on mutually opposite sides of the carrier (14) and each cooperating with a guide (26").

**5.** A deflection controlled roll in accordance with any one of the preceding claims, **characterized in that** the guide (26") cooperating with a respective guide member (26') is formed at a counter plate (28) secured to the carrier (14) or to the bearing sleeve.

**6.** A deflection controlled roll in accordance with any one of the preceding claims, **characterized in that** the guide member (26') is formed by a flange with a collar or the like.

**7.** A deflection controlled roll in accordance with any one of the preceding claims, **characterized in that** the roll jacket (12) is axially fixed to the carrier (14) at the axial end at the drive side via the guide means (26) associated with a relevant bearing housing (24).

**8.** A deflection controlled roll in accordance with any one of the preceding claims, **characterized in that** the roll jacket (12) is supported radially at the other axial end, preferably at the guide side, at the carrier (14) transversely to the pressing force plane via the axial bearing sleeve (22) of a relevant bearing housing (24), but is axially displaceable relative to it.

**9.** A deflection controlled roll in accordance with claim 8, **characterized in that** the bearing sleeve (22) of the relevant bearing housing (24) is radially supported at the carrier (14) via at least two bearing members (30) arranged at mutually opposite carrier sides, said bearing members being respectively rotatably mounted in the bearing sleeve (22) or in the carrier (14) about an axis (Y) perpendicular to the pressing force plane.

**10.** A deflection controlled roll in accordance with claim 9, **characterized in that** the bearing members (30) respectively rotatably mounted in the bearing sleeve (22) or the carrier (14) about an axis (Y) perpendicular to the pressing force plane cooperate with a counter surface which is preferably formed by a counter plate (32) secured to the carrier (14) or to the bearing sleeve (22).

**11.** A deflection controlled roll in accordance with any one of the preceding claims, **characterized in that** at least one piston in cylinder arrangement (34) acting generally in the pressing force plane perpendicular to the roll axis (X) is provided radially between the bearing sleeve (22) of a respective bearing housing (24) and the carrier (14).

**12.** A deflection controlled roll in accordance with claim 11, **characterized in that** at least one piston in cylinder arrangement (34) is provided at the support member side of the carrier (14) and / or at least one piston in cylinder arrangement (34) is arranged at the opposite carrier side.

**13.** A deflection controlled roll in accordance with claim 11 or claim 12, **characterized in that** the piston in cylinder arrangement (34) is provided to relieve the roll jacket (12) from the weight forces acting outside the working width of the roll jacket (12) and/or to load or to relieve the respective jacket end in order to influence the pressing force distribution in the press nip by controlled pressure medium loading and/or to fix the roll jacket (12) in place in a position raised from a counter roll by shutting off the pressure medium backflow from the piston in cylinder arrangement (34).

**14.** A deflection controlled roll in accordance with any one of the preceding claims, **characterized in that** the bearing sleeve (22) of a respective bearing housing (24) is provided in the region of a carrier spigot (14') narrowed with respect to the axially central region of the carrier (14).

**15.** A deflection controlled roll in accordance with claim 14, **characterized in that** the piston in cylinder arrangement (34) is arranged between the narrowed carrier spigot (14') and the bearing sleeve (22).

**16.** A deflection controlled roll in accordance with any one of the preceding claims, **characterized in that** the piston (34') of the piston in cylinder arrangement (34) acting on the bearing sleeve (22) comprises a relief chamber (36) fed with pressure fluid at its side confronting the bearing sleeve (22).

**17.** A deflection controlled roll in accordance with claim 16, **characterized in that** the relief chamber (36) is fed via at least one capillary (44).

**18.** A deflection controlled roll in accordance with claim 16 or claim 17, **characterized in that** the feeding of the relief chamber (36) takes place via the pressure chamber (42) of the piston in cylinder arrangement (34) and through the piston (34').

19. A deflection controlled roll in accordance with claim 16 or claim 17, **characterized in that** the feeding of the relief chamber (36) takes place from the side of the bearing sleeve (22).

20. A deflection controlled roll in accordance with any one of the preceding claims, **characterized in that** the piston (34') of the piston in cylinder arrangement (34) directly contacts the inner side of the bearing sleeve (22).

21. A deflection controlled roll in accordance with any one of claims 1 to 19, **characterized in that** the piston (34') of the piston in cylinder arrangement (34) contacts a shallow side of an intermediate member (38) arranged between the carrier (14) and the bearing sleeve (22).

22. A deflection controlled roll in accordance with any one of the preceding claims, **characterized in that** at least one axial end of the roll jacket (12) or the axial continuation (12') associated with this is rotatably mounted at the bearing sleeve (22) by two axially spaced apart bearings (20).

23. A deflection controlled roll in accordance with claim 22, **characterized in that** the two axially spaced apart bearings are each formed by a rolling bearing (20).

24. A deflection controlled roll in accordance with any one of the preceding claims, **characterized in that** it is made as a single-zone roll, i.e. at least the support members (18) can be loaded with the same pressure.

25. A deflection controlled roll in accordance with any one of claims 1 to 23, **characterized in that** it is made as a multi-zone roll, i.e. at least some of the support members (18) can be loaded with different pressures.

26. A deflection controlled roll in accordance with any one of the preceding claims, **characterized in that** the axial end of the roll jacket (12) at the drive side or the axial continuation (12') associated with it outwardly radially carries a gear ring (48) serving for the roll drive.

27. A deflection controlled roll in accordance with any one of the preceding claims, **characterized in that** the axial centers of the gear ring (48), of the bearing arrangement (20) rotatably holding the roll jacket (12) at the bearing housing (24), of the guide means (26) and/or of the piston in cylinder arrangement (34) lie substantially in a common plane (E) perpendicular to the roll axis (X)

## Revendications

1. Cylindre (10) à autoréglage du fléchissement comportant une enveloppe de cylindre périphérique (12), un tirant (14) traversant axialement l'enveloppe de cylindre (12) et retenu du côté extrémité solidairement en rotation dans des bâtis (16), et au moins un élément de soutien (18) qui est agencé sur le tirant (14) et qui exerce une force de soutien sur le côté intérieur de l'enveloppe de cylindre dans un plan de force de pressage, dans lequel au moins une extrémité axiale de l'enveloppe de cylindre (12) ou un prolongement axial (12') associé à celle-ci est montée(e) par au moins un palier avec faculté de rotation sur un coussinet axial (22), non rotatif et s'étendant dans la zone entre l'enveloppe de cylindre (12) ou le prolongement axial (12') et le tirant (14), d'un boîtier de montage (24) qui est bloqué à l'encontre d'une rotation et qui mobile librement par rapport au tirant (14) sensiblement dans le plan de force de pressage perpendiculairement à l'axe de cylindre (X), et l'enveloppe de cylindre (12) prend appui radialement contre le tirant (14) via le coussinet axial (22) d'un boîtier de montage respectif (24) transversalement au plan de force de pressage et est fixée par une extrémité axiale axialement sur le tirant (14) via des moyens de guidage (26) prévus radialement entre le coussinet (22) du boîtier de montage concerné (24) et le tirant (14) et permettant par rapport au tirant (14) aussi bien un mouvement de basculement qu'un mouvement du coussinet (22) sensiblement dans le plan de force de pressage perpendiculairement à l'axe de cylindre,
   **caractérisé en ce que**
   les moyens de guidage (26) comprennent au moins un élément de guidage (26') monté dans le coussinet (22) ou dans le tirant (14) avec faculté de rotation autour d'un axe (Y) perpendiculaire au plan de force de pressage, élément qui glisse à titre de coulisseau dans un guidage (26") prévu sur le tirant (14) ou sur le coussinet (22) et qui est guidé par ledit guidage en translation perpendiculairement à l'axe de cylindre (X) sensiblement parallèlement au plan de force de pressage.

2. Cylindre à autoréglage de fléchissement selon la revendication 1,
   **caractérisé en ce que**
   les moyens de guidage (26) prévus radialement entre le coussinet (22) et le tirant (14) sont agencés dans une zone axialement médiane du coussinet (22) et/ou de façon centrée par rapport à ce coussinet (22) en direction axiale.

**3.** Cylindre à autoréglage de fléchissement selon l'une ou l'autre des revendications 1 et 2, **caractérisé en ce que** le coussinet (22) prend appui radialement contre le tirant (14) également transversalement au plan de force de pressage via les moyens de guidage (26).

**4.** Cylindre à autoréglage de fléchissement selon l'une des revendications précédentes, **caractérisé en ce que** les moyens de guidage (26) comprennent au moins deux éléments de guidage (26') en forme de coulisseaux prévus sur des côtés mutuellement opposés du tirant (14) et coopérant chacun avec un guidage (26").

**5.** Cylindre à autoréglage de en direction axiale selon l'une des revendications précédentes, **caractérisé en ce que** le guidage (26") coopérant avec un élément de guidage respectif (26') est réalisé sur une plaque antagoniste (28) fixée sur le tirant (14) ou sur le coussinet.

**6.** Cylindre à autoréglage de en direction axiale selon l'une des revendications précédentes, **caractérisé en ce que** l'élément de guidage (26') est formé par un tenon à collerette ou similaire.

**7.** Cylindre à autoréglage de fléchissement selon l'une des revendications précédentes, **caractérisé en ce que** à l'extrémité axiale côté entraînement, l'enveloppe de cylindre (12) est fixée axialement sur le tirant (14) via les moyens de guidage (26) associés à un boîtier de montage concerné (24).

**8.** Cylindre à autoréglage de fléchissement selon l'une des revendications précédentes, **caractérisé en ce que** à l'autre extrémité axiale de préférence du côté guidage, l'enveloppe de cylindre (12) prend appui radialement contre le tir ant (14) transversalement au plan de force de pressage via le coussinet axial (22) d'un boîtier de montage concerné (24), cependant en étant mobile en translation axiale par rapport audit tirant.

**9.** Cylindre à autoréglage de fléchissement selon la revendication 8, **caractérisé en ce que** le coussinet (22) du boîtier de montage concerné (24) prend appui radialement contre le tirant (14) via au moins deux éléments de montage (30) agencés sur des côtés mutuellement opposés du tirant, qui sont montés chacun dans le coussinet (22) ou dans le tirant (14) avec faculté de rotation autour d'un axe (Y) perpendiculaire au plan de force de pressage.

**10.** Cylindre à autoréglage de fléchissement selon la revendication 9, **caractérisé en ce que** les éléments de montage (30) montés dans le coussinet (22) ou dans le tirant (14) avec faculté de rotation autour d'un axe (Y) perpendiculaire au plan de force de pressage coopèrent avec une surface antagoniste qui est formée de préférence par une plaque antagoniste (32) fixée sur le tirant (14) ou sur le coussinet (22).

**11.** Cylindre à autoréglage de fléchissement selon l'une des revendications précédentes, **caractérisé en ce que** il est prévu radialement entre le coussinet (22) d'un boîtier de montage respectif (24) et le tirant (14) au moins un agencement à piston-et-cylindre (34) agissant généralement dans le plan de force de pressage perpendiculairement à l'axe de cylindre (X).

**12.** Cylindre à autoréglage de fléchissement selon la revendication 11, **caractérisé en ce que** il est prévu au moins un agencement à piston-et-cylindre (34) disposé sur le côté élément de soutien de tirant (14) et/ou au moins un tel agencement disposé sur le côté opposé du tirant.

**13.** Cylindre à autoréglage de fléchissement selon l'une ou l'autre des revendications 11 et 12, **caractérisé en ce que** l'agencement à piston-et-cylindre (34) est prévu pour soulager l'enveloppe de cylindre (12) vis-à-vis des forces pondérales agissant à l'extérieur de la largeur de travail de l'enveloppe de cylindre (12), et/ou pour charger ou soulager l'extrémité d'enveloppe respective par une alimentation commandée en fluide sous pression en vue d'influer sur la répartition des forces de pressage dans l'emprise de presse, et/ou pour arrêter l'enveloppe de cylindre (12) dans une position soulevée depuis un cylindre antagoniste par obturation du reflux de fluide sous pression hors de l'agencement à piston-et-cylindre (34).

**14.** Cylindre à autoréglage de fléchissement selon l'une des revendications précédentes, **caractérisé en ce que** le coussinet (22) d'un boîtier de montage respectif (24) est prévu dans la zone d'un tenon de tirant (14') qui va en se rétrécissant par rapport à la zone axialement centrale du tirant (14).

**15.** Cylindre à autoréglage de fléchissement selon la revendication 14, **caractérisé en ce que**

l'agencement à piston-et-cylindre (34) est agencé entre le tenon de tirant (14') rétréci et le coussinet (22).

16. Cylindre à autoréglage de fléchissement selon l'une des revendications précédentes,
**caractérisé en ce que**
le piston (34') de l'agencement à piston-et-cylindre (34) sollicitant le coussinet (22) comprend une chambre de soulagement (36) alimentée en fluide sous pression sur son côté tourné vers le coussinet (22).

17. Cylindre à autoréglage de fléchissement selon la revendication 16,
**caractérisé en ce que**
la chambre de soulagement (36) est alimentée via au moins un capillaire (44).

18. Cylindre à autoréglage de fléchissement selon l'une ou l'autre des revendications 16 et 17,
**caractérisé en ce que**
l'alimentation de la chambre de soulagement (36) s'effectue via la chambre de pression (42) de l'agencement à piston-et-cylindre (34) et à travers le piston (34').

19. Cylindre à autoréglage de fléchissement selon l'une ou l'autre des revendications 16 et 17,
**caractérisé en ce que**
l'alimentation de la chambre de soulagement (36) s'effectue depuis le côté du coussinet (22).

20. Cylindre à autoréglage de fléchissement selon l'une des revendications précédentes,
**caractérisé en ce que**
le piston (34') de l'agencement à piston-et-cylindre (34) s'applique directement contre le côté intérieur du coussinet (22).

21. Cylindre à autoréglage de fléchissement selon l'une des revendications 1 à 19,
**caractérisé en ce que**
le piston (34') de l'agencement à piston-et-cylindre (34) s'applique contre un côté plat d'un élément intermédiaire (38) agencé entre le tirant (14) et le coussinet (22).

22. Cylindre à autoréglage de fléchissement selon l'une des revendications précédentes,
**caractérisé en ce que**
au moins une extrémité axiale de l'enveloppe de cylindre (12) ou le prolongement axial (12') associé à celle-ci est monté(e) avec faculté de rotation sur le coussinet (22) par deux paliers axialement espacés.

23. Cylindre à autoréglage de fléchissement selon la revendication 22,
**caractérisé en ce que**

les deux paliers axialement espacés sont formés chacun par un palier à roulement (20).

24. Cylindre à autoréglage de fléchissement selon l'une des revendications précédentes,
**caractérisé en ce que**
il est réalisé sous la forme d'un cylindre à zone unique, c'est-à-dire qu'au moins les éléments de soutien (18) sont susceptibles d'être alimentés sous la même pression.

25. Cylindre à autoréglage de fléchissement selon l'une des revendications 1 à 23,
**caractérisé en ce que**
il est réalisé sous la forme d'un cylindre à zone multiple, c'est-à-dire qu'au moins les éléments de soutien (18) sont susceptibles d'être alimentés au moins partiellement sous des pressions différentes.

26. Cylindre à autoréglage de fléchissement selon l'une des revendications précédentes,
**caractérisé en ce que**
l'extrémité axiale côté entraînement de l'enveloppe de cylindre (12) ou le prolongement axial (12') associé à celle-ci porte radialement à l'extérieur une couronne dentée (48) servant à l'entraînement du cylindre.

27. Cylindre à autoréglage de fléchissement selon l'une des revendications précédentes,
**caractérisé en ce que**
les centres axiaux de la couronne dentée (48), de l'agencement de paliers (20) retenant l'enveloppe de cylindre (12) avec faculté de rotation sur le boîtier de montage (24), des moyens de guidage (26) et/ou de l'agencement à piston-et-cylindre (34) se trouvent dans un plan commun (E) sensiblement perpendiculaire à l'axe de cylindre (X).

Fig. 1

EP 1 239 170 B1

14

# Fig. 2

# Fig. 3

## Fig. 4

## Fig. 5

# Fig. 6

# Fig. 7

# Fig. 8

# Fig. 9